(19) Europäisches Patentamt
European Patent Office
Office européen des brevets

(11) **EP 4 346 042 A1**

(12) **EUROPEAN PATENT APPLICATION**

(43) Date of publication:
**03.04.2024 Bulletin 2024/14**

(21) Application number: **23156582.1**

(22) Date of filing: **14.02.2023**

(51) International Patent Classification (IPC):
**H02H 3/093** (2006.01)        **H02H 3/00** (2006.01)

(52) Cooperative Patent Classification (CPC):
**H02H 3/093;** H02H 3/006

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.08.2022  CN 202210920278**

(71) Applicant: **Zhejiang Dahua Technology Co., Ltd.
Hangzhou, Zhejiang 310053 (CN)**

(72) Inventors:
• **SHI, Xiaoling**
  **310053 Hangzhou, Zhejiang, (CN)**
• **ZHU, Leilei**
  **310053 Hangzhou, Zhejiang, (CN)**
• **LI, Jianping**
  **310053 Hangzhou, Zhejiang, (CN)**

(74) Representative: **Wang, Bo
Panovision IP
Ebersberger Straße 3
85570 Markt Schwaben (DE)**

(54) **OVERCURRENT PROTECTIVE CIRCUIT AND DEVICE**

(57)    The present disclosure discloses an overcurrent protective circuit and device, including a charging and discharging module and a control module. The charging and discharging module may include a first capacitor, a first resistor, and a second resistor, and after the first capacitor is connected in parallel with the second resistor, they may be connected in series with the first resistor. A first preset point between the first resistor and the first capacitor may be connected with the control module, and the control module may collect a voltage value corresponding to the first capacitor through the first preset point. When the charging and discharging module receives an overcurrent signal, the first resistor, the first capacitor, and an external power supply may form a closed circuit. When the charging and discharging module does not receive the overcurrent signal, the second resistor and the first capacitor may form a closed circuit. When the voltage value corresponding to the first capacitor is greater than a first voltage, the control module may control the external power supply to be turned off. When the voltage value corresponding to the first capacitor is smaller than the second voltage, the control module may control the external power supply to be turned on. An overcurrent protective time and a deprotective time of the circuit can be accurately controlled by adjusting flexibly a capacitor charging time constant and a discharging capacitor time constant.

100

Current Sampling Module
110

↓ Overcurrent signal

Charging And Discharging Module
120

↓ Voltage signal

Control Module
130

**FIG. 1**

**Description**

**CROSS-REFERENCE TO RELATED APPLICATIONS**

This application claims priority of Chinese Patent Application No. 202210920278.5, filed on August 2, 2022, the entire contents of which are hereby incorporated by reference.

**TECHNICAL FIELD**

The present disclosure relates to the field of circuit technology, and in particular, to an overcurrent protective circuit and device.

**BACKGROUND**

Under normal circumstances, an electronic device has a corresponding rated current. The rated current refers to a maximum current that can pass through the electronic device for a long time under a reference ambient temperature and a working condition of a rated voltage, which is usually an operating current of the electronic device. If an actual current flowing through the electronic device exceeds the rated current, it may cause the electronic device to burn out. Therefore, it is necessary to perform overcurrent protection on the electronic device to avoid the above situation. An overcurrent protective circuit is one of ways to realize the overcurrent protection for the electronic device. An effect of protecting the electronic device may be achieved by disconnecting the power supply automatically when it detects that the actual current flowing through a preset component in the circuit exceeds a set current. The existing overcurrent protective circuit is usually provided with a counting module to complete overcurrent protection and deprotection, but a deprotective time and an overcurrent protective time (i.e., the trigger time of overcurrent protection) of the circuit cannot be precisely adjusted. Thus, the existing overcurrent protective circuit cannot be flexibly applied to various application scenarios.

Therefore, it is necessary to provide an overcurrent protective circuit and device so that the overcurrent protective time and the deprotective time of the circuit can be accurately controlled.

**SUMMARY**

One of the embodiments of the present disclosure provides an overcurrent protective circuit, including a current sampling module, a charging and discharging module, and a control module. The current sampling module may be configured to collect a current of a circuit to be protected and output an overcurrent signal to the charging and discharging module when the current exceeds a current threshold. The charging and discharging module may include a first capacitor and may be configured to receive the overcurrent signal and control charging and discharging of the first capacitor. The control module may be configured to collect a voltage of the first capacitor and control turn-on and turn-off of the circuit to be protected. When the charging and discharging module receives the overcurrent signal, the first capacitor may be in a charging state, or when the charging and discharging module does not receive the overcurrent signal, the first capacitor may be in a discharging state. When the voltage of the first capacitor is greater than a first voltage, the control module may control the circuit to be protected to be turned off, or when the voltage of the first capacitor is smaller than a second voltage, the control module may control the circuit to be protected to be turned on.

**BRIEF DESCRIPTION OF THE DRAWINGS**

The present disclosure is further illustrated in terms of exemplary embodiments. These exemplary embodiments are described in detail with reference to the drawings. These embodiments are non-limiting exemplary embodiments, in which like reference numerals represent similar structures, wherein:

FIG. 1 is a schematic diagram illustrating an exemplary overcurrent protective circuit according to some embodiments of the present disclosure;
FIG. 2 is a schematic structural diagram illustrating an exemplary overcurrent protective circuit according to some embodiments of the present disclosure;
FIG. 3 is a schematic structural diagram illustrating an exemplary overcurrent protective circuit according to some embodiments of the present disclosure;
FIG. 4 is a schematic structural diagram illustrating an exemplary overcurrent protective circuit according to some embodiments of the present disclosure;
FIG. 5 is a schematic structural diagram illustrating an exemplary overcurrent protective circuit according to some embodiments of the present disclosure;
FIG. 6 is a schematic structural diagram illustrating an exemplary overcurrent protective circuit according to some embodiments of the present disclosure;
FIG. 7 is a schematic structural diagram illustrating an exemplary overcurrent protective circuit according to some embodiments of the present disclosure;
FIG. 8 is a schematic structural diagram illustrating an exemplary overcurrent protective circuit according to some embodiments of the present disclosure;
FIG. 9 is a schematic structural diagram illustrating an exemplary overcurrent protective circuit according to some embodiments of the present disclosure;
FIG. 10 is a schematic structural diagram illustrating an exemplary overcurrent protective circuit according to some embodiments of the present disclosure;
FIG. 11 is a schematic diagram illustrating an exemplary overcurrent protective circuit according to some embodiments of the present disclosure;
FIG. 12 is a schematic diagram illustrating a voltage waveform of a charging and discharging capacitor according to some embodiments of the present disclosure;

FIG. 13 is a schematic diagram illustrating a grid voltage waveform of a power switch tube according to some embodiments of the present disclosure;

FIG. 14 is a schematic diagram illustrating a current waveform of a power supply of a circuit to be protected according to some embodiments of the present disclosure;

FIG. 15 is a schematic diagram illustrating a current waveform at an instant of overcurrent protection according to some embodiments of the present disclosure; and

FIG. 16 is a schematic structural diagram illustrating a comparator module according to some embodiments of the present disclosure.

## DETAILED DESCRIPTION

In order to more clearly illustrate the technical solutions related to the embodiments of the present disclosure, a brief introduction of the drawings referred to the description of the embodiments is provided below. Obviously, the drawings described below are only some examples or embodiments of the present disclosure. Those having ordinary skills in the art, without further creative efforts, may apply the present disclosure to other similar scenarios according to these drawings. Unless obviously obtained from the context or the context illustrates otherwise, the same numeral in the drawings refers to the same structure or operation.

It should be understood that the "system," "device," "unit," and/or "module" used herein are one method to distinguish different components, elements, parts, sections, or assemblies of different levels. However, if other words can achieve the same purpose, the words can be replaced by other expressions.

As used in the disclosure and the appended claims, the singular forms "a," "an," and "the" include plural referents unless the content clearly dictates otherwise; the plural forms may be intended to include singular forms as well. In general, the terms "comprise," "comprises," and/or "comprising," "include," "includes," and/or "including," merely prompt to include steps and elements that have been clearly identified, and these steps and elements do not constitute an exclusive listing. The methods or devices may also include other steps or elements.

The flowcharts used in the present disclosure illustrate operations that the system implements according to the embodiment of the present disclosure. It should be understood that the foregoing or following operations may not necessarily be performed exactly in order. Instead, the operations may be processed in reverse order or simultaneously. Besides, one or more other operations may be added to these processes, or one or more operations may be removed from these processes.

As mentioned above, a conventional overcurrent protective device may usually be provided with a counting module to complete overcurrent protection and deprotection. Specifically, after sampling current data is converted into a data signal voltage, the data signal voltage may be compared with a reference voltage. If the data signal voltage is greater than the reference voltage, a turn-off signal may be generated and transmitted to a driver and a current sampling module, and a count of counting times of the counting module may be increased by 1. After the count of counting times exceeds a preset value, a circuit may be controlled to enter a hiccup protective mode, and adjust the count of counting times of the counting module as 0. However, since the overcurrent protective circuit only completes overcurrent protection and deprotection through the counting module set in the circuit, and a deprotective time and an overcurrent protective time of the circuit cannot be precisely adjusted, the overcurrent protective circuit may not be flexibly applied to various application environments.

An overcurrent protective circuit and device provided in the embodiments of the present disclosure may include a current sampling module, a charging and discharging module, and a control module. The current sampling module may be configured to collect a current of a circuit to be protected and output an overcurrent signal to the charging and discharging module when the current exceeds a current threshold. The charging and discharging module may include a first capacitor and is configured to receive the overcurrent signal and control charging and discharging of the first capacitor. The control module may be configured to collect a voltage of the first capacitor and control turn-on and turn-off of the circuit to be protected. When the charging and discharging module receives the overcurrent signal, the first capacitor may be in a charging state, or when the charging and discharging module does not receive the overcurrent signal, the first capacitor may be in a discharging state. When the voltage of the first capacitor is greater than a first voltage, the control module may control the circuit to be protected to be turned off, or when the voltage of the first capacitor is smaller than a second voltage, the control module may control the circuit to be protected to be turned on. The overcurrent protective circuit and device described in the embodiments of the present disclosure can accurately control the deprotective time and the overcurrent protective time of the circuit using charging and discharging characteristics of the capacitor. At the same time, since a charging time and a discharging time of the capacitor can be easily adjusted by modifying circuit parameters, the overcurrent protective circuit and device described in the embodiments of the present disclosure can be flexibly applied to the overcurrent protection of the circuit to be protected in various application environments.

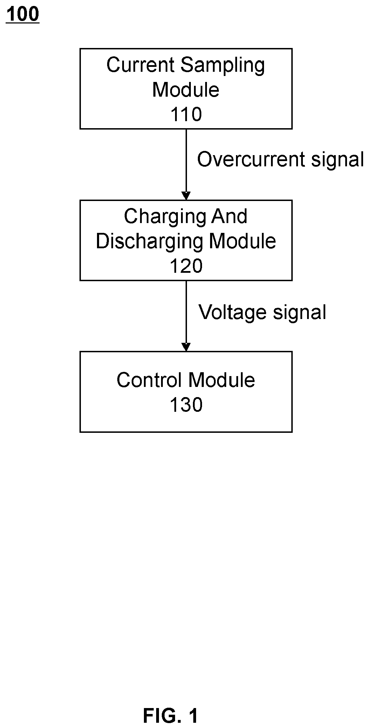

FIG. 1 is a schematic diagram illustrating an exemplary overcurrent protective circuit 100 according to some embodiments of the present disclosure.

As shown in FIG. 1, the overcurrent protective circuit 100 may include a current sampling module 110, a charging and discharging module 120, and a control module 130.

The current sampling module 110 may be configured to collect a current of a circuit to be protected and output an overcurrent signal to the charging and discharging module 120 when the current exceeds a current threshold. The circuit to be protected may be a circuit that needs overcurrent protection. The circuit to be protected may have a rated current. If an actual current in the circuit to be protected exceeds the rated current, the circuit to be protected may be damaged or other adverse conditions may occur. The current threshold may be a preset comparison threshold, which may be configured to compare with a magnitude of the collected current. When the collected current of the circuit to be protected exceeds the current threshold, it may be determined that the circuit to be protected may have an overcurrent situation. At this time, the current sampling module 110 may generate an overcurrent current or directly determine the collected current as the overcurrent current and output the overcurrent current to the charging and discharging module for subsequent operations. In some embodiments, the current threshold may be set to the rated current of the circuit to be protected, or a current value slightly smaller than the rated current, so as to ensure that the overcurrent protective circuit takes effect when the actual current of the circuit to be protected exceeds the rated current. In some embodiments, the current threshold may be manually set and adjusted according to an actual condition. In some embodiments, the circuit to be protected may be a part of an electronic device, or an independent circuit. In some embodiments, the circuit to be protected may also be a certain electronic component or a part of components in a certain circuit. In some embodiments, the circuit to be protected may also include or only include a power supply for supplying power to the circuit to be protected. In some embodiments, a first end of the current sampling module 110 may be connected with a first end of the circuit to be protected, and a second end of the current sampling module 110 may be connected with a second end of the circuit to be protected, which may be configured to collect the current of the circuit to be protected.

The charging and discharging module 120 may include a first capacitor and is configured to receive the overcurrent signal and control charging and discharging of the first capacitor. In some embodiments, when the charging and discharging module 120 receives the overcurrent signal output by the current sampling module 110, the charging power supply or the overcurrent current may charge the first capacitor, so that the first capacitor may be in a charging state. In some embodiments, when the charging and discharging module 120 does not receive the overcurrent signal (for example, the overcurrent signal disappears), the first capacitor may form a closed circuit with other components (e.g., a resistor component), so that the first capacitor may be in a discharging state at this time. In some embodiments, the first capacitor may be an electronic device with charging and discharging functions. The first capacitor may include a paper capacitor, a metallized paper capacitor, a ceramic capacitor, a film capacitor, an oil-immersed paper capacitor, an aluminum electrolytic capacitor, a semi-variable capacitance, a variable capacitances, etc. In some embodiments, a third end of the current sampling module 110 may be connected with the charging and discharging module 120, which may be configured to input the overcurrent current to the charging and discharging module 120.

The control module 130 may be configured to collect a voltage of the first capacitor and control turn-on and turn-off of the circuit to be protected. In some embodiments, when the current sampling module 110 outputs the overcurrent current, the first capacitor may be in a charging state, and the voltage across the first capacitor may keep increasing. When the voltage of the first capacitor collected by the control module 130 is greater than a first voltage, the control module 130 may output a turn-off signal and control the turn-off of the circuit to be protected, for example, turn off the power supply of the circuit to be protected. At this time, the circuit to be protected may enter a turn-off state of the overcurrent protection. Since the power supply of the circuit to be protected has been turned off, the circuit to be protected may output no current, and the current collected by the current sampling module 110 may drop below the current threshold. At this time, no overcurrent current may be input to the charging and discharging module 120. In some embodiments, when the charging and discharging module 120 does not receive the overcurrent signal, the first capacitor may be in a discharging state, and the voltage across the first capacitor may keep decreasing. When the voltage of the first capacitor collected by the control module 130 is smaller than a second voltage, the control module 130 may output a turn-on signal and control the turn-on of the circuit to be protected, for example, turn on the power supply of the circuit to be protected. At this time, the overcurrent protection may be released from the circuit to be protected. In some embodiments, one end of the control module 130 may be connected with one end of the first capacitor, which may be configured to collect a voltage value of the first capacitor. The other end of the control module 130 may be connected with a power supply switch of the circuit to be protected, which may be configured to control the circuit to be protected to be turned on and turned off.

Combined with charging and discharging characteristics of the capacitor, the overcurrent protective circuit 100 including the current sampling module 110, the charging and discharging module 120, and the control module 130 may achieve the control of an overcurrent protective time and a deprotective time by setting relevant parameters of the overcurrent protective circuit 100. In some embodiments, each module in the overcurrent protective circuit 100 (e.g., the current sampling module 110, the charging and discharging module 120, and the control module 130) may be individually detachable or replaceable. A component in each module (e.g., the first capacitor in the charging and discharging module 120) may also be detachable or replaceable. For different application scenarios or different overcurrent protective requirements, it may be necessary to set different overcurrent protective time and deprotective time, so components with different parameters (e.g., the first capacitor in the charging and discharging module 120) may be selected to form the current sampling module 110, the charging and discharging module 120, or the control module 130. The current sampling module 110, the charging and discharging module 120, and the control module 130 with different structures may be selected to form the overcurrent protective circuit 100. Merely by way of example, if the electronic device in the circuit to be protected is sensitive to the current and is easily damaged, a relatively short overcurrent protective time and a relatively long deprotective time may be set.

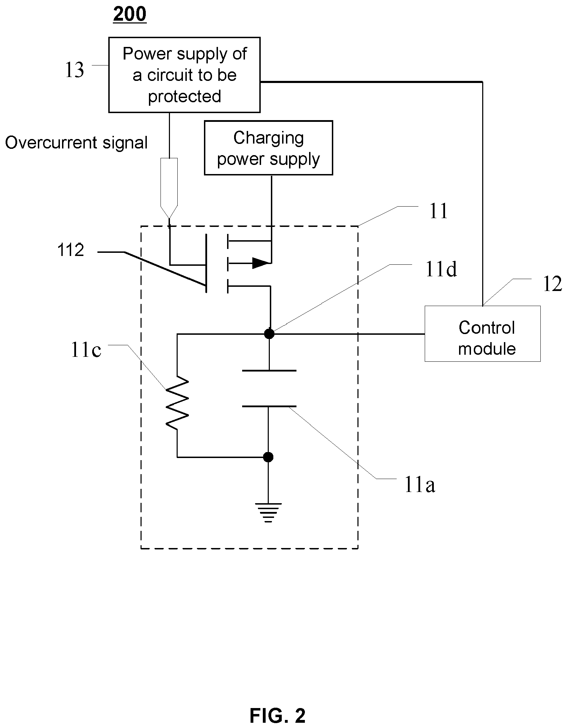

FIG. 2 is a schematic structural diagram illustrating an exemplary overcurrent protective circuit 200 according to some embodiments of the present disclosure.

The overcurrent protective circuit 200 shown in FIG. 2 may include a current sampling module (not shown in the figure), a charging and discharging module 11, and a control module 12. The current sampling module may be connected with a circuit to be protected and may be configured to collect a current of the circuit to be protected and output an overcurrent signal to the charging and discharging module 11 when the current exceeds a current threshold. A power supply 13 of the circuit to be protected may be configured to supply power to the circuit to be protected.

The charging and discharging module 11 may include a first capacitor 11a, a first switch tube 112, and a charging and discharging resistor 11c. The first capacitor 11a may be mainly configured to perform the function of the charging and discharging module 13 and may be charged or discharged when receiving or not receiving an overcurrent current. A first end of the first switch tube 112 may be configured to receive the overcurrent signal output by the current sampling module, a second end of the first switch tube 112 may be connected with a charging power supply, and a third end of the first switch tube 112 may be connected with the first capacitor 11a. The charging and discharging resistor 11c may be connected in parallel with both ends of the first capacitor. The other end of the first capacitor 11a may be grounded. In some embodiments, a first preset point 11d between the third end of the first switch tube 112 and the first capacitor 11a may be connected with the control module 12, and the control module 12 may collect a voltage value corresponding to the first capacitor 11a.

In some embodiments, when the first end of the first switch tube 112 receives the overcurrent signal, a closed circuit may be formed between the second end of the first switch tube 112 and the third end of the first switch tube 112. At this time, the charging power supply, the first capacitor 11a, and an earthing end may form the closed circuit, the first capacitor 11a may receive the current output by the charging power supply and may be in a charging state, and the voltage value corresponding to the first capacitor 11a may gradually increase.

In some embodiments, when the first end of the first switch tube 112 does not receive the overcurrent signal, an open circuit may be formed between the second end of the first switch tube 112 and the third end of the first switch tube 112. At this time, the first capacitor 11a and the charging and discharging resistor 11c may form the closed circuit, the first capacitor 11a may output the current to the charging and discharging resistor 11c and may be in a discharging state, and the voltage value corresponding to the first capacitor 11a may gradually decrease.

The charging power supply may be mainly configured to charge the capacitor of the charging and discharging module 11 (e.g., the first capacitor 11a). In some embodiments, the charging power supply may be an external power supply, e.g., an external voltage source and an external current source. The power provided by the external power supply may be adjusted or replaced with a suitable power supply as required.

In some embodiments, the first capacitor 11a may also be charged directly through the power supply 13 of the circuit to be protected, without setting an additional charging power supply. At this time, the second end of the first switch tube 112 may be also connected with the current sampling module. When the first end of the first switch tube 112 receives the overcurrent signal, a closed circuit may be formed between the second end of the first switch tube 112 and the third end of the first switch tube 112, the overcurrent signal output by the current sampling module may flow through the first capacitor 11a and may be grounded, and the overcurrent signal may provide a charging current for the first capacitor 11a.

The charging and discharging resistor 11c may be an electronic device with a resistance effect and may form a closed circuit with the first capacitor 11a, so that the first capacitor 11a may be in a discharging state when there is no overcurrent signal. In some embodiments, the charging and discharging resistor 11c may include one of a fixed value resistor, a variable resistor, or a current source of adjustable resistance. In order to be applied to different overcurrent protective scenarios, it may be necessary to dynamically adjust the charging and discharging resistor 11c and the first capacitor 11a, so the overcurrent protective circuit 200 may be adjusted by using the charging and discharging resistor 11c with adjustable resistance and the first capacitor 11a according to a required overcurrent protective time and deprotective time.

It should be noted that each module in the overcurrent protective circuit 200 and each electronic device in the module can be detachable or replaceable, so as to adjust relevant parameters of the circuit to control the overcurrent protective time and the deprotective time.

Moreover, the power supply for charging the charging and discharging module may be an individually external power supply, or the power supply of the circuit to be protected. For example, adjusting the relevant parameters of the circuit may include directly replacing some capacitors and resistors, or may include adjusting a variable parameter (variable capacitance, variable resistance, etc.).

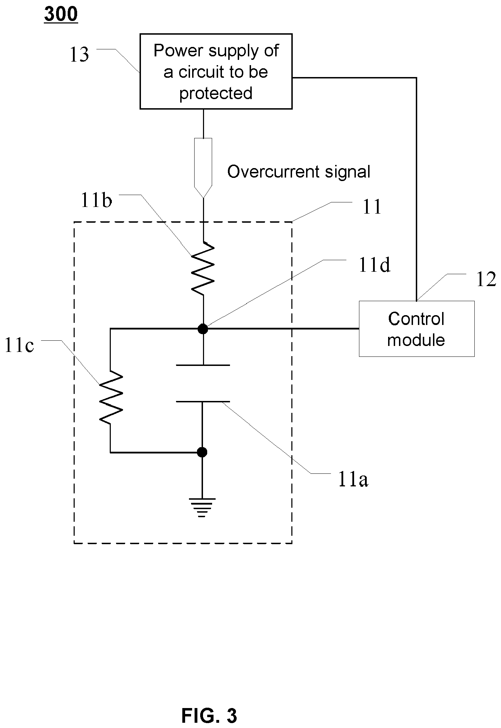

FIG. 3 is a schematic structural diagram illustrating an exemplary overcurrent protective circuit 300 according to some embodiments of the present disclosure.

The overcurrent protective circuit 300 may be similar to the overcurrent protective circuit 200, except that the overcurrent protective circuit 300 realizes a related function through two resistors connected with the first capacitor 11a, and needs to provide a charging current through an overcurrent signal. Specifically, the charging and discharging module 11 may include the first capacitor 11a, a first resistor 11b, and a second resistor 11c. After the first capacitor 11a is connected in parallel with the second resistor 11c, they may be connected in series with the first resistor 11b. In some embodiments, the first preset point 11d between the first resistor 11b and the first capacitor 11a may be connected with the control module 12, and the control module 12 may collect a voltage value corresponding to the first capacitor 11a through the first preset point 11d.

In some embodiments, when the charging and discharging module 11 receives the overcurrent signal, the first resistor 11b, the first capacitor 11a, and a circuit to be protected may form a closed circuit. At this time, the first capacitor 11a may receive the overcurrent signal and may be in a charging state, and the voltage value corresponding to the first capacitor 11a may gradually increase. In some embodiments, when the charging and discharging module 11 does not receive the overcurrent signal, the second resistor 11c and the first capacitor 11a may form a closed circuit, the first capacitor 11a may output a current to the second resistor 11c, the first capacitor 11a may be in a discharging state, and the voltage value corresponding to the first capacitor 11a may gradually decrease.

When the voltage value corresponding to the first capacitor 11a keeps increasing until the voltage value is greater than the first voltage, it indicates that the circuit to be protected may have generated overcurrent (e.g., exceeding a rated current). At this time, the control module 12 may control turn-off between the circuit to be protected and the power supply, thereby realizing protection of various electronic devices in the circuit to be protected. At this time, due to the turn-off between the circuit to be protected and the power supply, the overcurrent signal may not be provided any more, and the first capacitor 11a may be in a discharging state and the voltage value corresponding to the first capacitor 11a may gradually decrease. When the voltage value corresponding to the first capacitor 11a decreases to be smaller than the second voltage, the control module 12 may control the turn-on between the circuit to be protected and the power supply. At this time, the voltage value corresponding to the first capacitor 11a may gradually increase to the first voltage.

In the overcurrent protective circuit, both a charging time and a discharging time of the charging and discharging module 11 may be controlled by adjusting parameters of each device in the circuit.

Specifically, the charging time $t_1$ of the charging and discharging module may be determined by the first resistor 11b and the first capacitor 11a, which may be determined according to Equation (1) as below:

$$t_1 = -R_{11b}C_{11a}\ln\left(\frac{V_{cc}-V_1}{V_{cc}}\right), \quad (1)$$

where $R_{11b}$ denotes a resistance value of the first resistor 11b, $C_{11a}$ denotes a capacitance value corresponding to the first capacitor 11a, $R_{11b}C_{11a}$ denotes a charging time constant of the first capacitor 11a, $V_{cc}$ denotes a voltage value of the power supply for charging the charging and discharging module(for example, an voltage value of an individually external power supply or an voltage value of the power supply of the circuit to be protected), and $V_1$ denotes the first voltage. In some embodiments, the $R_{11b}$ and $C_{11a}$ can be selected according to the overcurrent protective time and deprotective time. Merely by way of example, to quickly trigger overcurrent protection, a value of $R_{11b}$ may take a minimum value or 0R , and a value of $C_{11a}$ may be 0.5uF. The first voltage $V_1$ may be set according to experience or related parameters. In some embodiments, the first voltage $V_1$ may be set as 2/3Vcc. When the charging time $t_1$ of the charging and discharging module passes, the voltage value corresponding to the first capacitor may increase to the first voltage. At this time, it is necessary to control the turn-off between the circuit to be protected and the power supply 13 through the control module, so the charging time $t_1$ of the charging and discharging module may be understood as an overcurrent protective time. The overcurrent protective time (the charging time $t_1$) can be set based on different overcurrent protective scenarios. In some embodiments, the overcurrent protective time may include 2μs~200μs.

The discharging time $t_2$ of the charging and discharging module may be determined by the second resistor 11c and the first capacitor 11a, which may be determined according to Equation (2) as below:

$$t_2 = -R_{11c}C_{11a}\ln\left(\frac{V_1-V_2}{V_1}\right), \quad (2)$$

where $R_{11c}$ denotes a resistance value of the second resistor 11c, $C_{11a}$ denotes the capacitance value corresponding to the first capacitor 11a, $R_{11c}C_{11a}$ denotes a discharging time constant of the first capacitor 11a, $V_{cc}$

denotes a voltage value of the power supply for charging the charging and discharging module, and $V_2$ denotes the second voltage. In some embodiments, the $R_{11c}$ and $C_{11a}$ can be selected according to the overcurrent protective time and deprotective time. Merely by way of example, if the $t_2 = 50ms$, a value of $R_{11b}$ may take a minimum value or $0R$, and a value of $C_{11a}$ may be 0.5uF. The second voltage $V_2$ may be set according to experience or related parameters. In some embodiments, the second voltage $V_2$ may be set as $1/3Vcc$. When the discharging time $t_2$ of the charging and discharging module passes, the voltage value corresponding to the first capacitor may decrease to the first voltage. At this time, it is necessary to control the turn-on between the circuit to be protected and the power supply 13 through the control module, so the discharging time $t_2$ of the charging and discharging module may be understood as the deprotective time. The deprotective time (the discharging time $t_2$) can be set based on different overcurrent protective scenarios. In some embodiments, the deprotective time may include 1ms~1s. In some embodiments, in order to conveniently adjust the overcurrent protective time and deprotective time, the first resistor and the second resistor may be variable resistors, and the first capacitor may also be variable capacitor.

As mentioned above, in order to avoid a situation that the voltage corresponding to the first capacitor 11a fluctuates around a single threshold voltage and cause the charging power supply 13 to switch repeatedly, the set first voltage may need to be greater than the second voltage. When the voltage value corresponding to the first capacitor 11a fluctuates between the first voltage and the second voltage, the control module may not need to operate. In some embodiments, the larger the difference between the first voltage and the second voltage is, the longer the time from turn-off to turn-on again of the power supply of the circuit to be protected may be. The smaller the difference between the first voltage and the second voltage is, the shorter the time from turn-off to turn-on again of the power supply of the circuit to be protected may be. Therefore, the difference between the first voltage and the second voltage may be set according to different usage scenarios. Merely by way of example, for a circuit to be protected whose power supply cannot be turned off for a long time, the difference between the first voltage and the second voltage may be set to be relatively small. For a circuit to be protected where an electronic device is relatively sensitive and easily damaged, the difference between the first voltage and the second voltage may be set to be relatively large.

To sum up, the overcurrent protective circuit may adjust the charging time constant and the discharging time constant of the capacitor by adjusting the circuit parameters (for example, the resistance values of the first resistor 11b and the second resistor 11c, and the capacitance value of the first capacitor 11a) according to the Equation (1) and the Equation (2), and further realize the precise controls of the overcurrent protective time and the deprotective time of the circuit to be protected.

It should be noted that each module in the overcurrent protective circuit 300 and each electronic device in the module can be detachable or detachable, so as to adjust the relevant parameters of the circuit to control the overcurrent protective time and the deprotective time, Moreover, the power supply for charging the charging and discharging module may be an individual external power supply, or the power supply of the circuit to be protected. For example, adjusting the relevant parameters of the circuit may include directly replacing some capacitors and resistors, or may include adjusting a variable parameter (variable capacitance, variable resistance, etc.).

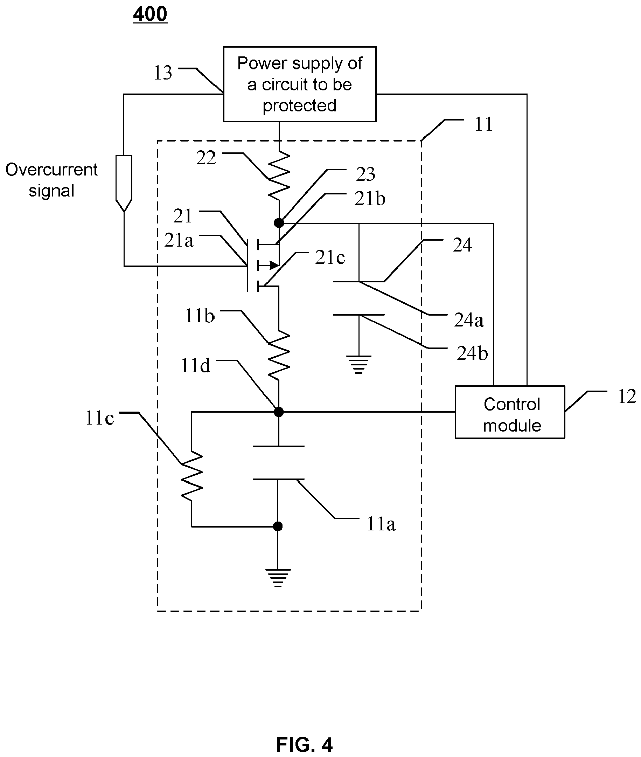

FIG. 4 is a schematic structural diagram illustrating an exemplary overcurrent protective circuit 400 according to some embodiments of the present disclosure.

The overcurrent protective circuit 400 may be similar to the overcurrent protective circuit 300 except that a charging and discharging module of the overcurrent protective circuit 400 may further include a second switch tube and a second capacitor to perform related functions. Specifically, as shown in FIG. 4, the charging and discharging module 11 may further include a second switch tube 21. A first end 21a of the second switch tube 21 may be configured to receive an overcurrent signal, a second end 21b of the second switch tube 21 may be connected with the power supply 13 (or charging power supply) of a circuit to be protected, and a third end 21c of the second switch tube 21 may be connected with the first resistor 11b. In some embodiments, a second preset point 23 may also be set between the second end 21b of the second switch tube 21 and the circuit to be protected.

In some embodiments, when the first end 21a of the second switch tube 21 receives the overcurrent signal, a closed circuit may be formed between the second end 21b of the second switch tube 21 and the third end 21c of the second switch tube 21. At this time, the power supply 13 (or charging power supply) of the circuit to be protected may charge the first capacitor 11a. In some embodiments, when the first end 21a of the second switch 21 does not receive the overcurrent signal, an open circuit may be formed between the second end 21b of the second switch 21 and the third end 21c of the first switch. At this time, the first capacitor 11a may be in a discharging state.

In some embodiments, the charging and discharging module 11 may further include a second capacitor 24. The second preset point 23 may be connected with a first end 24a of the second capacitor 24, and a second end 24b of the second capacitor 24 may be grounded. The second preset point 23 may be connected with the control module 12, so that the control module 12 may collect a voltage value corresponding to the second capacitor 24 through the second preset point 23. In some embodiments, the charging and discharging module 11 may further include a third resistor 22. The third resistor 22 may be arranged in series between the second end 21b of the second switch tube 21 and the circuit to be protected. By setting the second capacitor 24 and the third resistor 22 between the charging and discharging module 11 or the control module 12 and the charging power supply 13 of the circuit to be protected, the charging and discharging module 11 and the control module can be avoided to a certain extent from being subjected to the impact of overcurrent or voltage fluctuations of power supply short-circuit.

It should be noted that each module in the overcurrent protective circuit 400 and each electronic device in the module can be detachable or replaceable, so as to adjust relevant parameters of the circuit to control an overcurrent protective time and a deprotective time. Moreover, both the overcurrent protective time and the deprotective time can be accurately controlled according to the Equation (1) and the Equation (2), and the power supply for charging the charging and discharging the module may be an individual external power supply, or the power supply of the circuit to be protected. For example, adjusting the relevant parameters of the circuit may include directly replacing some capacitors and resistors, or may include adjusting a variable parameter (variable capacitance, variable resistance, etc.).

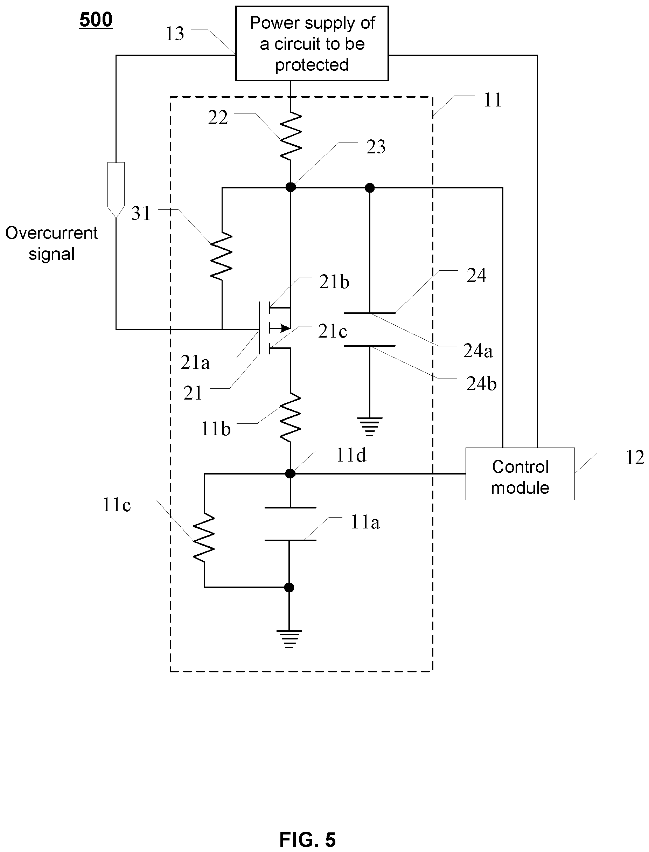

FIG. 5 is a schematic structural diagram illustrating an exemplary overcurrent protective circuit 500 according to some embodiments of the present disclosure.

The overcurrent protective circuit 500 may be similar to the overcurrent protective circuit 400, except that a charging and discharging module of the overcurrent protective circuit 500 may further include a fourth resistor. Specifically, as shown in FIG. 5, the charging and discharging module 11 may further include a fourth resistor 31, and both ends of the fourth resistor 31 may be connected with the second preset point 23 and the first end 21a of the second switch tube 21, respectively. The fourth resistor 31 may be configured to discharge and continue the current for the second capacitor 24 when an open circuit is formed between the second end 21b of the second switch tube 21 and the third end 21c of the second switch tube 21, thereby the protect a component in the circuit. In some embodiments, a resistance value of the fourth resistor 31 may be set as 10kΩ.

It should be noted that each module in the overcurrent protective circuit 500 and each electronic device in the module can be detachable or replaceable, so as to adjust relevant parameters of the circuit to control the overcurrent protective time and the deprotective time. Moreover, both the overcurrent protective time and the deprotective time can be accurately controlled according to the Equation (1) and the Equation (2). For example, adjusting the relevant parameters of the circuit may include directly replacing some capacitors and resistors, and may include adjusting a variable parameter (variable capacitance, variable resistance, etc.).

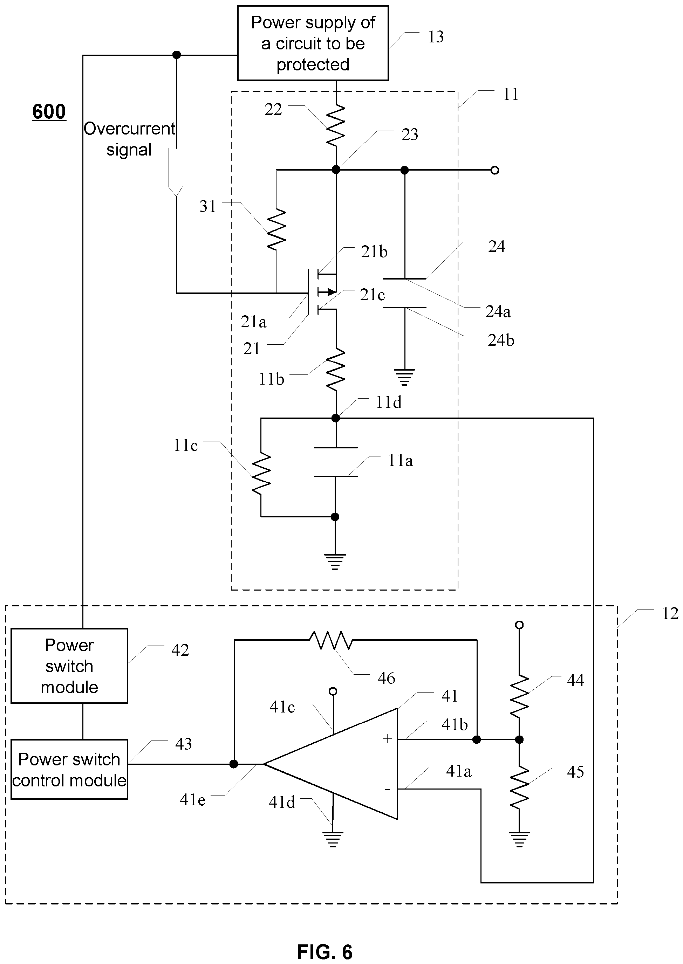

FIG. 6 is a schematic structural diagram illustrating an exemplary overcurrent protective circuit 600 according to some embodiments of the present disclosure.

In some embodiments, as shown in FIG. 6, the control module 12 may include a comparator module 41, a power switch module 42, and a power switch control module 43. The comparator module 41 may be configured to compare a collected voltage of a first capacitor with the first voltage and the second voltage. The power switch control module 43 may be connected with the comparator module 41, and configured to send a turn-on signal or a turn-off signal according to a comparison result of the comparator module. The power switch module 42 may be connected with the power switch control module 43, and configured to control the turn-on and turn-off of a charging power supply of a circuit to be protected according to the turn-on signal or the turn-off signal of the power switch control module 43, for example, turn-on or turn-off between the circuit to be protected and the charging power supply.

In some embodiments, as shown in FIG. 6, a first end 41a of the comparator module 41 may be configured to obtain a voltage value corresponding to the first capacitor 11a, and a second end 41b of the comparator module 41 may be configured to obtain the first voltage or the second voltage. Specifically, the first end 41a of the comparator module 41 may be connected with the first preset point 11d. The second end 41b of the comparator module 41 may be connected with the second preset point 23 through a fifth resistor 44, and may be grounded through a sixth resistor 45. A third end 41c of the comparator module 41 may be connected with the second preset point 23. A fourth end 41d of the comparator module 41 may be grounded. A fifth end 41e of the comparator module 41 (i.e., an output end of a hysteresis comparator) may be connected with the second end 41b of the comparator module 41 through a seventh resistor 46, and the fifth end 41e of the comparator module 41 may be connected with the power switch control module 43. The power switch control module 43 may be connected with the power switch module 42, and configured to control turn-on or turn-off of the power switch module 42.

Specifically, as shown in FIG. 6 , the comparator module 41 may include a hysteresis comparator, and the hysteresis comparator may be configured to compare the voltage of the first capacitor with the first voltage and the second voltage. The first end 41a of the comparator module 41 may be an inverting input end of the hysteresis comparator, the second end 41b of the comparator module 41 may be a non-inverting input end of the hysteresis comparator, and the fifth end 41e of the comparator module 41 may be the output end of the hysteresis comparator.

In some embodiments, when the first capacitor 11a is in a charging state, the second end 41b of the comparator module 41 may be configured to obtain the

first voltage $V_1$, and the first voltage $V_1$ may be determined according to Equation (3) as below:

$$V_1 = \frac{R_6 V_{cc}}{R_7 \| R_5 + R_6},    (3)$$

where $V_{cc}$ denotes a voltage value of the power supply for charging the charging and discharging module, $R_6$ denotes resistance of the sixth resistor 45, $R_7$ denotes resistance of the seventh resistor 46, and $R_5$ denotes resistance of the fifth resistor. It can be known from the Equation (3) that the first voltage $V_1$ can be adjusted by adjusting parameters of related resistors in the circuit.

In some embodiments, when the first capacitor 11a is in the discharging state, the second end 41b of the comparator module 41 may be configured to obtain the second voltage $V_2$, and the second voltage $V_2$ may be determined according to Equation (4) as below:

$$V_2 = \frac{(R_7 \| R_6) V_{cc}}{R_7 \| R_6 + R_5},    (4)$$

where $V_{cc}$ denotes a voltage value of the power supply for charging the charging and discharging module, $R_6$ denotes the resistance of the sixth resistor 45, $R_7$ denotes the resistance of the seventh resistor 46, and $R_5$ denotes the resistance of the fifth resistor. It can be known from the Equation (4) that the first voltage $V_2$ can be adjusted by adjusting parameters of related resistors in the circuit.

Further, due to a transmission delay of the comparator module 41 and the switch tube in the overcurrent protective circuit 600, impact of the transmission delay may need to be considered when a charging time and a discharging time of the first capacitor are calculated. Specifically, if the total transmission delay of the comparator module 41 and the switch tube in the circuit is T, then the charging time $t_1$ and discharging time $t_2$ calculated in the original Equation (1) and Equation (2) may be changed according to Equation (5) and Equation (6) as follows:

$$t_1 = -R_{11b} C_{11a} \ln\left(\frac{V_{cc} - V_1}{V_{cc}}\right) + T,    (5)$$

$$t_2 = -R_{11c} C_{11a} \ln\left(\frac{V_1 - V_2}{V_1}\right) + T,    (6)$$

To sum up, the voltage value corresponding to the first capacitor 11a may be compared with the first voltage and the second voltage through the comparator module 41 to control turn-off or turn-on of the circuit to be protected.

In some embodiments, if the voltage value corresponding to the first capacitor 11a is greater than the first voltage, the power switch control module 43 may send the turn-off signal, and the power switch module 42 may turn off the power supply 13 of the circuit to be protected when receiving the turn-off signal, thereby realizing protection of the circuit to be protected, an external load, or components in the circuit.

In some embodiments, if the voltage value corresponding to the first capacitor 11a is smaller than the second voltage, the power switch control module 43 may send the turn-on signal, and the power switch module 42 may turn on the power supply 13 of the circuit to be protected when receiving the turn-on signal, thereby realizing deprotection of the circuit to be protected, the external load or the components in the circuit.

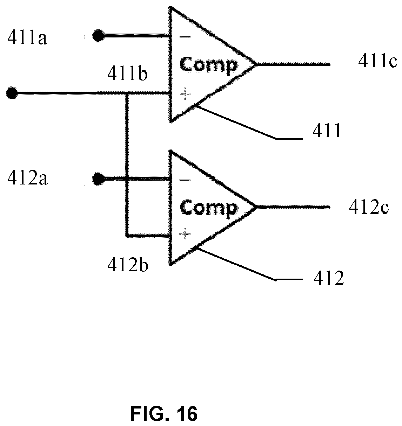

In some embodiments, instead of using one hysteresis comparator, the comparator module 41 may also include two or more comparators. One of the two or more comparators may be configured to compare the voltage of the first capacitor with the first voltage, and another comparator of the two or more comparators may be configured to compare the voltage of the first capacitor with the second voltage. FIG. 16 is another schematic structural diagram of the comparator module. The comparator module 41 may include a first comparator 411 and a second comparator 412. An inverting input end 411a of the first comparator 411 may be configured to obtain the first voltage. An inverting input end 412a of the second comparator 412 may be configured to obtain the second voltage. Non-inverting input ends of the first comparator 411 and the second comparator 412 may be configured to obtain the voltage value corresponding to the first capacitor 11a. Specifically, both the non-inverting input ends of the first comparator 411 and the second comparator 412 may be connected with the first preset point 23. The first comparator 411 may be configured to compare the voltage value corresponding to the first capacitor 11a collected at the first preset point 23 with the first voltage, and an output end 411c of the first comparator 411 may be configured to output a first comparison result. The second comparator 412 may be configured to compare the voltage value corresponding to the first capacitor 11a collected at the first preset point 23 with the second voltage, and an output end 412c of the second comparator 412 is configured to output a second comparison result. The control module 12 may send the turn-on signal or the turn-off signal according to combination of the first comparison result and the second comparison result.

In some embodiments, when the first capacitor 11a is in the charging state, the voltage value corresponding to the first capacitor 11a may keep increasing. When the voltage value corresponding to the first capacitor 11a is greater than the first voltage, the first comparison result may be positive. As mentioned above, in order to avoid a situation that the voltage corresponding to the first capacitor 11a fluctuates around a single threshold voltage and cause the charging power supply 13 to switch repeatedly, the set first voltage may need to be greater than the second voltage. At this time, the voltage value corresponding to the first capacitor 11a may be also greater than the second voltage, that is, the second comparison result may be also positive. In this case, it may indicate that the circuit to be protected has generated overcurrent, and the control module 12 may output the turn-off signal.

In some embodiments, when the first capacitor 11a is in the discharging state, the voltage value corresponding to the first capacitor 11a may keep decreasing. Since the first voltage is greater than the second voltage, when the voltage value corresponding to the first capacitor 11a is smaller than the second voltage, the second comparison result may be negative. At this time, the voltage value corresponding to the first capacitor 11a may be also smaller than the first voltage, that is, the first comparison result may be also negative. In this case, the control module 12 may output the turn-on signal. In some embodiments, when the voltage corresponding to the first capacitor 11a is smaller than the first voltage but greater than the second voltage, the first comparison result may be negative but the second comparison result may be positive. The control module may take no action at this time.

In some embodiments, the comparator module 41 may include at least one comparator capable of realizing the similar function and purpose, and may also be a comparator group composed of any structure, which is not limited to the above description.

It should be noted that each module in the overcurrent protective circuit 600 and each electronic device in the module can be detachable or replaceable, so as to adjust relevant parameters of the circuit to control the overcurrent protective time and the deprotective time. Moreover, both the overcurrent protective time and the deprotective time can be accurately controlled according to the Equation (5) and the Equation (6). The power supply for charging the charging and discharging the module may be an individual external power supply or the power supply of the circuit to be protected. For example, adjusting the relevant parameters of the circuit may include directly replacing some capacitors and resistors, or may include adjusting a variable parameter (variable capacitance, variable resistance, etc.).

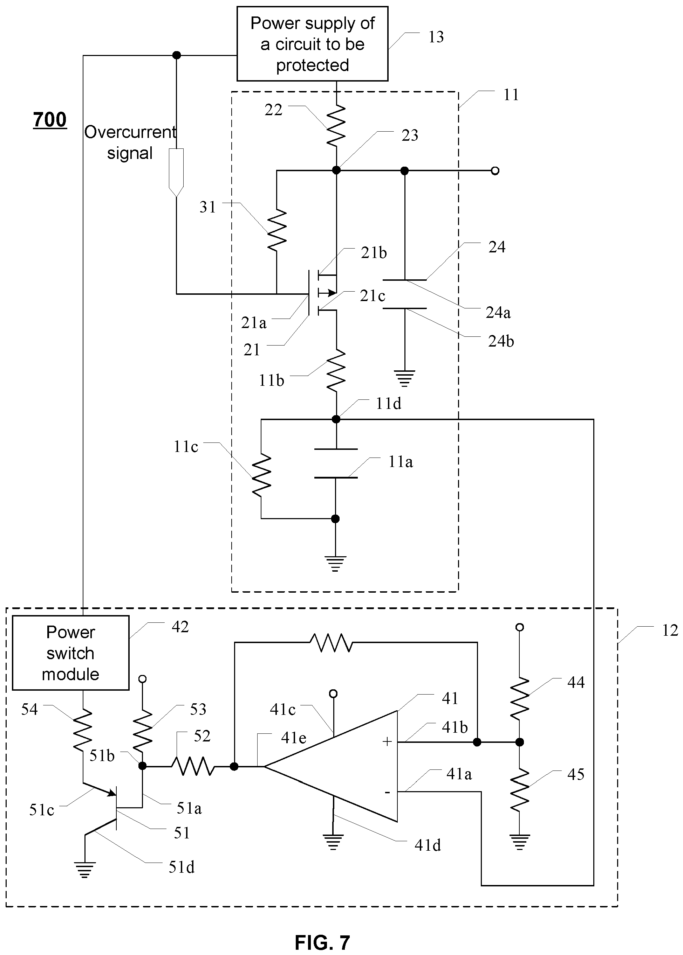

FIG. 7 is a schematic structural diagram illustrating an exemplary overcurrent protective circuit 700 according to some embodiments of the present disclosure.

In some embodiments, as shown in FIG. 7, the power switch control module 43 may include a first triode 51, an eighth resistor 53, a ninth resistor 53, and a tenth resistor 54. Specifically, a first end 51a of the first triode 51 may be connected with the fifth end 41e of the comparator 41 through the eighth resistor 52. A third preset point 51b between the eighth resistor 52 and the first end 51a of the first triode 51 may be connected with the second preset point 23 through the ninth resistor 53. A second end 51c of the first triode 51 may be connected with the power switch module 42 through the tenth resistor 54, and a third end 51d of the first triode 51 may be grounded.

In some embodiments, when a voltage value corresponding to the first capacitor 11a is greater than the first voltage, a closed circuit may be formed between the second end 51c of the first triode 51 and the third end 51d of the first triode 51. At this time, the power switch control module 43 may output a turn-off signal. When receiving the turn-off signal, the power switch module 42 may control turn-off of the power supply 13 of a circuit to be protected, so that a charging and discharging module may not receive an overcurrent signal, the charging and discharging module may be in a discharging state, and the voltage value corresponding to the first capacitor 11a may keep decreasing.

In some embodiments, when the voltage value corresponding to the first capacitor 11a is smaller than the second voltage, an open circuit may be formed between the second end 51c of the first triode 51 and the third end 51d of the first triode 51, and an open circuit may be formed between the second end 51c of the first triode 51 and the third end 51d of the first triode 51. At this time, the power switch control module 43 may output a turn-on signal. When receiving the turn-on signal, the power switch module 42 may control turn-on of the power supply 13 of the circuit to be protected, so that a closed circuit may be formed between the charging and discharging module 11 and the power supply sources 13 of the circuit to be protected, the charging and discharging module may be in a charging state, and the voltage value corresponding to the first capacitor 11a may keep increasing.

It should be noted that each module in the overcurrent protective circuit 700 and each electronic device in the module can be detachable or replaceable, so as to adjust relevant parameters of the circuit to control the overcurrent protective time and the deprotective time. Moreover, both the overcurrent protective time and the deprotective time can be accurately controlled according to the Equation (5) and the Equation (6). The power supply for charging and discharging the module may be an individual external power supply or the power supply of the circuit to be protected. For example, adjusting the relevant parameters of the circuit may include directly replacing some capacitors and resistors, or may include adjusting a variable parameter (variable capacitance, variable resistance, etc.).

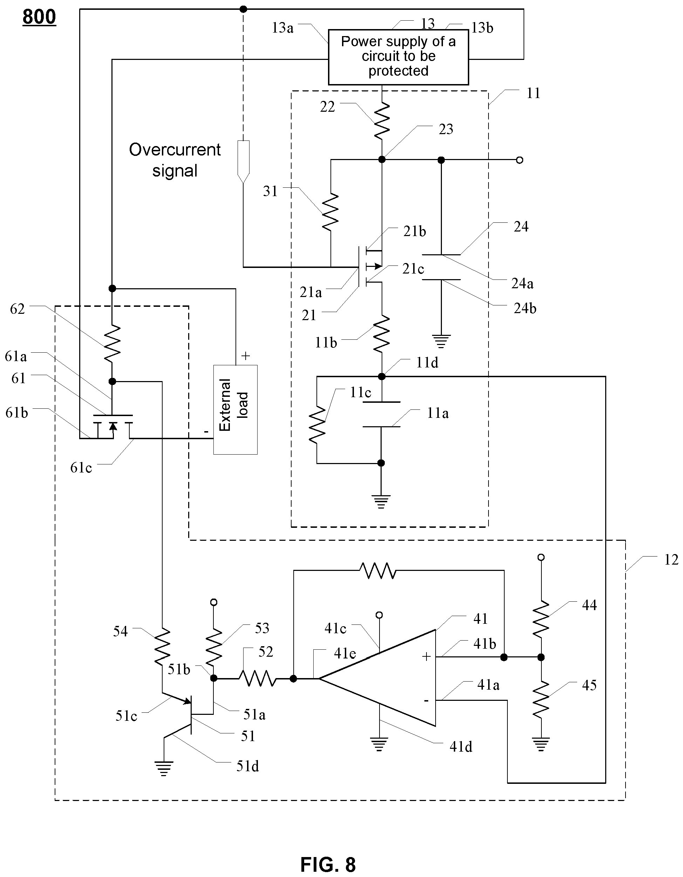

FIG. 8 is a schematic structural diagram illustrating an exemplary overcurrent protective circuit 800 according to some embodiments of the present disclosure.

In some embodiments, as shown in FIG. 8, the power switch module 42 may include a third switch tube 61 and an eleventh resistor 62. Specifically, a first end 61a of the third switch tube 61 may be connected with a first end 13a of the power supply 13 of a circuit to be protected through the eleventh resistor 62. A second end 61b of the third switch tube 61 may be connected with a second end 13b of the power supply 13 of the circuit to be protected. A third end 61c of the third switch tube 61 may be connected with an external load. When an open circuit is formed between the second end 61b of the third switch tube 61 and the third end 61c of the third switch tube 61, the charging and discharging module 11 may be not capable of obtaining an overcurrent signal.

In some embodiments, if a closed circuit is formed between the second end 51c of the first triode 51 and the third end 51d of the first triode 51, then the first end 61a of the third switch 61 may obtain a forward voltage. At this time, an open circuit may be formed between the second end 61b of the third switch tube 61 and the third end 61c of the third switch tube 61, and the charging and discharging module 11 may be not capable of obtaining the overcurrent signal.

In some embodiments, if an open circuit is formed between the second end 51c of the first triode 51 and the third end 51d of the first triode 51, then the first end 61a of the third switch 61 may obtain a reverse voltage. At this time, a closed circuit may be formed between the second end 61b of the third switch tube 61 and the third end 61c of the third switch tube 61, and the charging and discharging module 11 may further obtain the overcurrent signal.

It should be noted that each module in the overcurrent protective circuit 800 and each electronic device in the module can be detachable or replaceable, so as to adjust relevant parameters of the circuit to control the overcurrent protective time and the deprotective time. Moreover, both the overcurrent protective time and the deprotective time can be accurately controlled according to the Equation (5) and the Equation (6). The power supply for charging the charging and discharging module may be an individual external power supply, or the power supply of the circuit to be protected. For example, adjusting the relevant parameters of the circuit may include directly replacing some capacitors and resistors, or may include adjusting a variable parameter (variable capacitance, variable resistance, etc.).

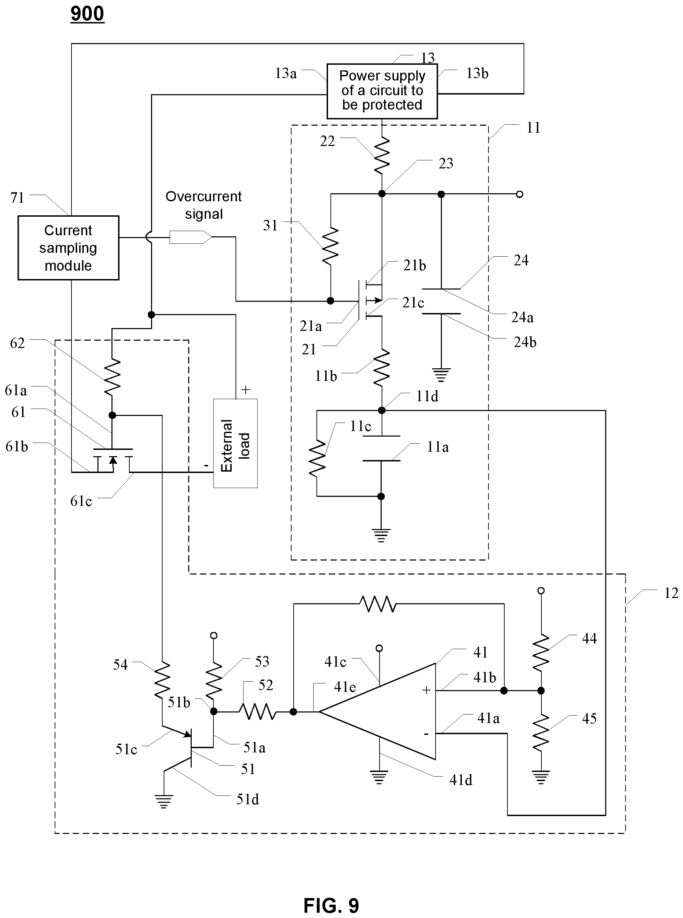

FIG. 9 is a schematic structural diagram illustrating an exemplary overcurrent protective circuit 900 according to some embodiments of the present disclosure.

In some embodiments, as shown in FIG. 9, a first end 71a of a current sampling module 71 may be connected with the second end 13b of the power supply 13 of a circuit to be protected. A second end 71b of the current sampling module 71 may be connected with the first end 13a of the power supply 13 of the circuit to be protected. A third end 71c of the current sampling module 71 may be connected with the charging and discharging module 11 and configured to send a collected overcurrent signal to the charging and discharging module 11.

In some embodiments, when a closed circuit is formed between the second end 61b of the third switch tube 61 and the third end 61c of the third switch tube 61, the power supply 13 of the circuit to be protected may supply power to an external load. At this time, If overcurrent occurs in the entire power supply circuit, the current sampling module 71 may transmit the overcurrent signal to the charging and discharging module 11, thereby realizing the obtaining of the overcurrent signal in the circuit to be protected.

It should be noted that each module in the overcurrent protective circuit 900 and each electronic device in the module can be detachable or replaceable, so as to adjust relevant parameters of the circuit to control the overcurrent protective time and the deprotective time. Moreover, both the overcurrent protective time and the deprotective time can be accurately controlled according to the Equation (5) and the Equation (6). The power supply for charging the charging and discharging the module may be an individual external power supply, or the power supply of the circuit to be protected. For example, adjusting the relevant parameters of the circuit may include directly replacing some capacitors and resistors, or may include adjusting a variable parameter (variable capacitance, variable resistance, etc.).

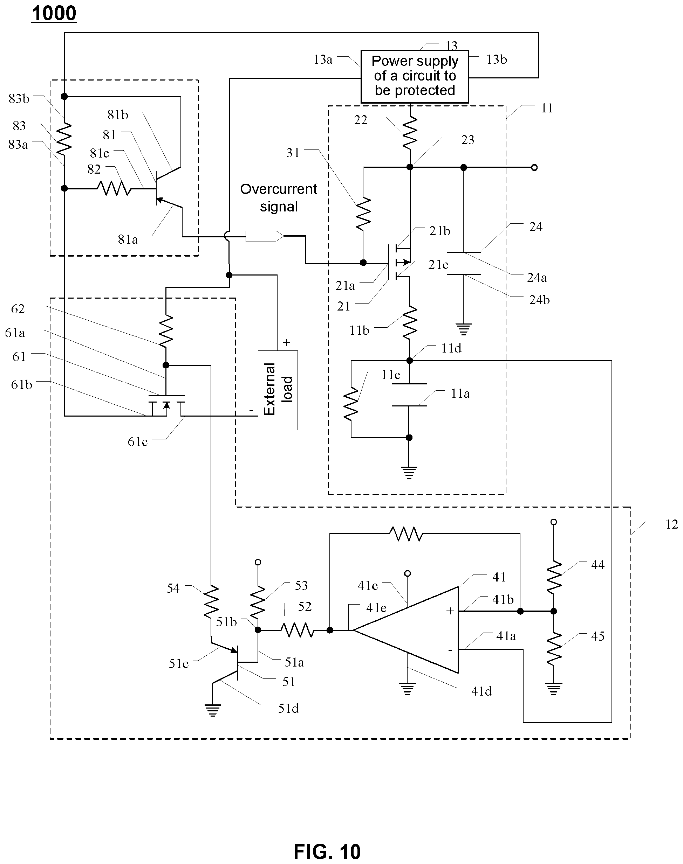

FIG. 10 is a schematic structural diagram illustrating an exemplary overcurrent protective circuit 1000 according to some embodiments of the present disclosure.

In some embodiments, as shown in FIG. 10, the current sampling module 71 may include a third triode 81, a twelfth resistor 82, and a thirteenth resistor 83. Specifically, a first end 81a of the third triode 81 may be connected with the charging and discharging module 11. A second end 81b of the third triode 81 may be connected with the second end 13b of the power supply 13 of a circuit to be protected. A third end 81c of the third triode 81 may be connected with a first end 83a of the thirteenth resistor 83 through the twelfth resistor 82. The first end 83a of the thirteenth resistor 83 may be also connected with the control module 12. A second end 83b of the thirteenth resistor 83 may be connected with the second end 13b of the power supply 13 of the circuit to be protected.

In some embodiments, when a current in the circuit to be protected flows through the thirteenth resistor 83, a voltage may be generated across the thirteenth resistor 83. When the voltage across the thirteenth resistor 83 is greater than a turn-on voltage corresponding to the third triode 81, a closed circuit may be formed between the power supply 13 of the circuit to be protected, the second end 81b of the third triode 81, and the first end 81a of the third triode 81. At this time, the first end 81a of the third triode 81 may output an overcurrent signal, thereby realizing the collection of the overcurrent signal. A current $I_1$ corresponding to the turn-on voltage may be determined according to Equation (7) as below:

$$I_1 = \frac{V_{be}}{R_{13}}, \quad (7)$$

where the current $I_1$ corresponding to the turn-on voltage corresponding to the third triode 81 may be an overcurrent trigger point, $V_{be}$ denotes the turn-on voltage corresponding to the third triode 81, and $R_{13}$ denotes resistance of the thirteenth resistor 83.

It should be noted that each module in the overcurrent protective circuit 1000 and each electronic device in the module can be detachable or replaceable, so as to adjust relevant parameters of the circuit to control the overcurrent protective time and the deprotective time. Moreover, both the overcurrent protective time and the deprotective time can be accurately controlled according to the Equation (5) and the Equation (6). The power supply for charging the charging and discharging module may be an individual external power supply or the power supply of the circuit to be protected. For example, adjusting the relevant parameters of the circuit may include directly replacing some capacitors and resistors, or may include adjusting a variable parameter (variable capacitance, variable resistance, etc.).

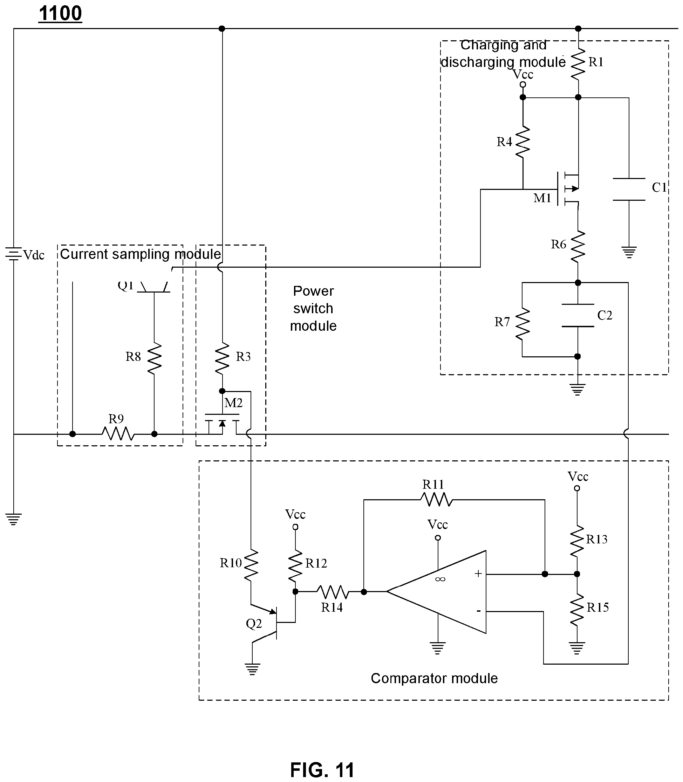

FIG. 11 is an example diagram illustrating an exemplary overcurrent protective circuit 1100 according to some embodiments of the present disclosure.

In order to more clearly illustrate the overcurrent protective circuit provided by some embodiments of the present disclosure, description may be illustrated in detail through specific examples as follows.

As shown in FIG. 11, circuit parameters in the overcurrent protective circuit 1100 may include a voltage value of a power supply of a circuit to be protected Vdc equal to 8.4 V, resistance of a third resistor R1 equal to 470 Ω, resistance of an eleventh resistor R3 equal to 1 kΩ, resistance of the fourth resistor R4 equal to 10 kΩ, resistance of a first resistor R6 equal to 1 kΩ, resistance of a second resistor R7 equal to 100 kΩ, resistance of a thirteenth resistor R8 equal to 470 kΩ, resistance of a twelfth resistor R9 equal to 0.1 kΩ, resistance of a tenth resistor R10 equal to 10 kΩ, resistance of a seventh resistor R11 equal to 400 kΩ, resistance of a ninth resistor R12 equal to 10 kΩ, resistance of a fifth resistor R13 equal to 400 kΩ, resistance of an eighth resistor R14 equal to 1 kΩ, and resistance of a sixth resistor R15 equal to 400 kΩ. A second switch tube M1 and a third switch tube M2 may be power switch tubes, respectively, and Q1 and Q2 may be the first triode and the second triode, respectively.

The circuit diagram shown in FIG. 11 may be divided into four modules including a current sampling module, a charging and discharging module, a comparator module, and a power switch module. Both of the comparator module and the power switch module may be part of a control module. The current sampling module may be mainly configured to collect a current of the circuit to be protected, and output an overcurrent signal to the charging and discharging module when the collected current is greater than a current threshold. The charging and discharging module may be configured to control a voltage of a first capacitor by controlling charging and discharging of the first capacitor and control the first capacitor to be in a charging state when the charging and discharging module receives the overcurrent signal. When not receiving the overcurrent signal, the charging and discharging module may be configured to control the first capacitor to be in a discharging state, and use a voltage across the first capacitor as an output signal to the comparator module. The comparator module may be configured to take a corresponding action according to the input voltage, and output a turn-off signal when the input voltage is greater than the first voltage $V_1$ or output a turn-on signal when the input voltage is smaller than the second voltage $V_2$. The power switch control module may be configured to receive the turn-on signal or the turn-off signal from the comparator module to control turn-on and turn-off of the circuit to be protected.

When overcurrent of the circuit to be protected is triggered, the first capacitor C2 starts to be charged. When the first capacitor C2 keeps being charged until the voltage of the first capacitor C2 is greater than a comparator threshold, i.e., the first voltage $V_1$, the comparator module may output the turn-off signal to control the turn-off of the circuit to be protected, and the circuit to be protected may enter a turn-off state of overcurrent protection. At this time, since the circuit to be protected has been turned off, there may be no current output, the overcurrent may not be triggered, and the first capacitor C2 may start to be discharged. When the first capacitor C2 keeps being discharged until the voltage of the first capacitor reaches a comparator threshold, i.e., the second voltage $V_2$, the comparator module may output the turn-on signal to control the turn-on of the circuit to be protected, and the circuit to be protected may be automatically deprotected. The time $t_1$ for the first capacitor C2 to be charged to the first voltage $V_1$ and the time $t_2$ for the first capacitor C2 to be discharged to the second voltage $V_2$ may be conveniently set by adjusting parameters of the relevant capacitors and resistors. The charging time $t_1$ may be a trigger time of overcurrent protection. The discharging time $t_2$ may be an automatic deprotective time of overcurrent protection.

It should be noted that each module in the overcurrent protective circuit 1100 and each electronic device in the module can be detachable or replaceable, so as to adjust relevant parameters of the circuit to control the overcurrent protective time and the deprotective time. Moreover, both the overcurrent protective time and the deprotective time can be accurately controlled according to the Equation (5) and the Equation (6). The power supply for charging the charging and discharging module may be an individual external power supply the power supply of the circuit to be protected. For example, adjusting the relevant parameters of the circuit may include directly replacing some capacitors and resistors, or may include adjusting a variable parameter (variable capacitance, variable resistance, etc.).

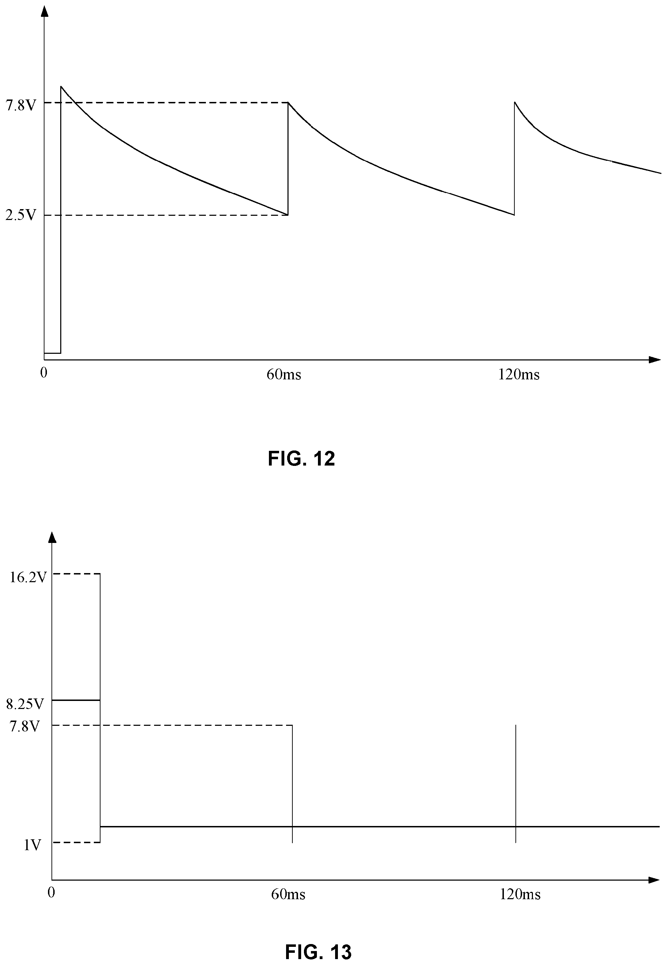

FIG. 12 is a schematic diagram illustrating a voltage waveform of a charging and discharging capacitor according to some embodiments of the present disclosure.

During a working process of the overcurrent protective circuit, a voltage waveform of the first capacitor C2 is shown in FIG 12. It can be seen from FIG. 12 that a voltage of the first capacitor C2 rises very fast, which may quickly trigger overcurrent protection. The voltage of the second capacitor C2 may drop slightly slow, which may also trigger automatic deprotection of the circuit within milliseconds (e.g., 60 ms).

FIG. 13 is a schematic diagram illustrating a grid voltage waveform of a power switch tube according to some embodiments of the present disclosure.

The grid voltage waveform of a third switch tube M2 is shown in FIG. 13. When the grid voltage reaches 7.8 V, the source and the drain electrode of the third switch tube M2 may be turned on, and the charging and discharging module may have a chance to obtain an overcurrent signal. On the contrary, the source and the drain electrode of the third switch tube M2 may be turned off, and the charging and discharging module may be not capable of obtaining the overcurrent signal. Fig. 13 shows that when the circuit to be protected continues to be short-circuited, the circuit enters a hiccup mode. When the grid of the third switch tube M2 is at high level (e.g., 8.25V), the circuit enters the overcurrent protection state at the moment of connection, and the grid voltage of M2 is pulled down. After a set deprotection time (e.g., 60 ms), the circuit tries to turn on the switch again. But due to the circuit continues to be short-circuited, the grid voltage of M2 is 7.8V, the circuit enters the overcurrent protection state again, and the grid voltage of M2 continues to be pulled down.

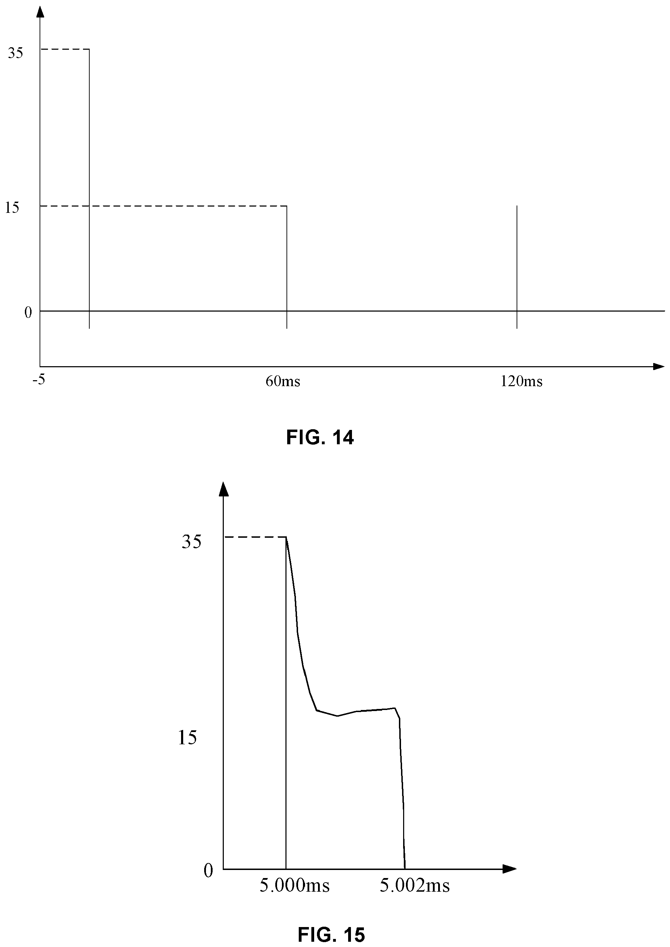

FIG. 14 is a schematic diagram illustrating a current waveform of a power supply of a circuit to be protected according to some embodiments of the present disclosure.

The waveform of a current flowing through the power supply of the circuit to be protected is shown in FIG. 14. When the current is close to 15 A (when the circuit is short-circuited, the current will rush up to 35A at moment), a circuit overcurrent protection may be triggered in a very short time, thereby controlling turn-off of the circuit to be protected.

FIG. 15 is a schematic diagram illustrating a current waveform at an instant of overcurrent protection according to some embodiments of the present disclosure.

The current waveform at an instant of power supply overcurrent protection is shown in FIG. 15. When the overcurrent occurs at 5.000 ms, the current rushes up to 35A at the moment, and then returns to the short circuit current, which is about 15A. Within 0.002 ms, the overcurrent protective circuit processes the overcurrent and turns off the circuit to be protected, and the current returns to zero. It can be seen that an overcurrent trigger time and a deprotective time of the overcurrent protective circuit in the embodiments of the present disclosure may be flexibly set, and the overcurrent trigger protective time may be extremely short, for example, smaller than 11 us. In addition, the overcurrent protective circuit illustrated in the examples of the present disclosure has advantages of simple design and low cost.

The present disclose also provides an overcurrent protective device. The device may include any one of the overcurrent protective circuits illustrated in the preceding embodiments, which can perform overcurrent protection on the working circuit, and the overcurrent protective time and the deprotective time can be flexibly set by modifying the circuit parameters in the device.

The beneficial effects of the embodiments of the present disclosure may include but are not limited to: (1) since the capacitor charging time constant and the discharging time constant can be adjusted by modifying the circuit parameters, the overcurrent protective time and the deprotective time of the circuit may be flexibly and accurately controlled, so as to realize the overcurrent protection of the circuit to be protected; (2) the overcurrent protective time may be extremely short, and the deprotective time may be flexibly set by changing the circuit components or modifying the parameters of the circuit components; (3) the design of the overcurrent protective circuit may be simple, the cost may be low, and the power consumption may be low; and (4) by setting the relationship between the first voltage and the second voltage, it is possible to avoid the situation that the overcurrent protective circuit is repeatedly switched between turn-on and turn-off states near a certain voltage due to the influence of circuit fluctuations.

It should be noted that different embodiments may have different beneficial effects. In different embodiments, the possible beneficial effects may include any combination of one or more of the above, or any other possible beneficial effects that may be obtained.

Having thus described the basic concepts, it may be rather apparent to those skilled in the art after reading this detailed disclosure that the foregoing detailed disclosure is intended to be presented by way of example only and is not limiting. Although not explicitly stated here, those skilled in the art may make various modifications, improvements and amendments to the present disclosure. These alterations, improvements, and modifications are intended to be suggested by this disclosure, and are within the spirit and scope of the exemplary embodiments of this disclosure.

Moreover, certain terminology has been used to describe embodiments of the present disclosure. For example, the terms "one embodiment," "an embodiment," and/or "some embodiments" mean that a particular feature, structure or characteristic described in connection with the embodiment is included in at least one embodiment of the present disclosure. Therefore, it is emphasized and should be appreciated that two or more references to "an embodiment" or "one embodiment" or "an alternative embodiment" in various parts of this specification are not necessarily all referring to the same embodiment. In addition, some features, structures, or features in the present disclosure of one or more embodiments may be appropriately combined.

Furthermore, the recited order of processing elements or sequences, or the use of numbers, letters, or other designations therefore, is not intended to limit the claimed processes and methods to any order except as may be specified in the claims. Although the above disclosure discusses through various examples what is currently considered to be a variety of useful embodiments of the disclosure, it is to be understood that such detail is solely for that purpose, and that the appended claims are not limited to the disclosed embodiments, but, on the contrary, are intended to cover modifications and equivalent arrangements that are within the spirit and scope of the disclosed embodiments. For example, although the implementation of various components described above may be embodied in a hardware device, it may also be implemented as a software only solution, e.g., an installation on an existing server or mobile device.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. However, this disclosure does not mean that the present disclosure object requires more features than the features mentioned in the claims. Rather, claimed subject matter may lie in less than all features of a single foregoing disclosed embodiment.

In some embodiments, the numbers expressing quantities or properties used to describe and claim certain embodiments of the present disclosure are to be understood as being modified in some instances by the term "about," "approximate," or "substantially." For example, "about," "approximate," or "substantially" may indicate $\pm 20\%$ variation of the value it describes, unless otherwise stated. Accordingly, in some embodiments, the numerical parameters set forth in the written description and attached claims are approximations that may vary depending upon the desired properties sought to be obtained by a particular embodiment. In some embodiments, the numerical parameters should be construed in light of the number of reported significant digits and by applying ordinary rounding techniques. Notwithstanding that the numerical ranges and parameters setting forth the broad scope of some embodiments of the present disclosure are approximations, the numerical values set forth in the specific examples are reported as precisely as practicable.

Each of the patents, patent applications, publications of patent applications, and other material, such as articles, books, specifications, publications, documents, things, and/or the like, referenced herein is hereby incorporated herein by this reference in its entirety for all purposes, excepting any prosecution file history associated with same, any of same that is inconsistent with or in conflict with the present document, or any of same that may have a limiting affect as to the broadest scope of the claims now or later associated with the present document. By way of example, should there be any inconsistency or conflict between the description, definition, and/or the use of a term associated with any of the incorporated material and that associated with the present document, the description, definition, and/or the use of the term in the present document shall prevail.

In closing, it is to be understood that the embodiments of the present disclosure disclosed herein are illustrative of the principles of the embodiments of the present disclosure. Other modifications that may be employed may be within the scope of the present disclosure. Thus, by way of example, but not of limitation, alternative configurations of the embodiments of the present disclosure may be utilized in accordance with the teachings herein. Accordingly, embodiments of the present disclosure are not limited to that precisely as shown and described.

## Claims

1. An overcurrent protective circuit, comprising a current sampling module, a charging and discharging module, and a control module, wherein

   the current sampling module is configured to collect a current of a circuit to be protected and output an overcurrent signal to the charging and discharging module when the current exceeds a current threshold;
   the charging and discharging module includes a first capacitor and is configured to receive the overcurrent signal and control charging and discharging of the first capacitor, wherein when the charging and discharging module receives the overcurrent signal, the first capacitor is in a charging state, or when the charging and discharging module does not receive the overcurrent signal, the first capacitor is in a discharging state; and
   the control module is configured to collect a voltage of the first capacitor and control turn-on and turn-off of the circuit to be protected, wherein when the voltage is greater than a first voltage, the control module controls the circuit to be protected to be turned off, or when the voltage is smaller than a second voltage, the control module controls the circuit to be protected to be turned on.

2. The overcurrent protective circuit of claim 1, wherein the charging and discharging module further includes a charging and discharging resistor and a first switch tube, a first end of the first switch tube is configured to receive the overcurrent signal, a second end of the first switch tube is connected with a charging power supply, a third end of the first switch tube is connected with the first capacitor, and the charging and discharging resistor is connected in parallel with both ends of the first capacitor;

when the first end of the first switch tube receives the overcurrent signal, a closed circuit is formed between the second end of the first switch tube and the third end of the first switch tube, and the first capacitor is in the charging state; or
when the first end of the first switch tube does not receive the overcurrent signal, an open circuit is formed between the second end of the first switch tube and the third end of the first switch tube, and the first capacitor is in the discharging state.

3. The overcurrent protective circuit of claim 1, wherein the charging and discharging resistor includes one of a fixed value resistor, a variable resistor, or a current source of adjustable resistance.

4. The overcurrent protective circuit of claim 1, wherein the charging and discharging module includes a first resistor and a second resistor, and after the first capacitor is connected in parallel with the second resistor, they are connected in series with the first resistor, wherein

when the charging and discharging module receives the overcurrent signal, the first resistor, the first capacitor, and a charging power supply form a closed circuit, and the first capacitor is in the charging state; or
when the charging and discharging module does not receive the overcurrent signal, the second resistor and the first capacitor form a closed circuit, and the first capacitor is in the discharging state; and
a first preset point between the first resistor and the first capacitor is connected with the control module, and the control module collects a voltage value corresponding to the first capacitor through the first preset point.

5. The overcurrent protective circuit of claim 4, wherein the charging and discharging module further includes a second switch tube configured to control charging and discharging of the first capacitor according to the overcurrent signal, wherein

a first end of the second switch tube is configured to receive the overcurrent signal, a second end of the second switch tube is connected with the charging power supply, and a third end of a first switch tube is connected with the first resistor;
when the first end of the second switch tube receives the overcurrent signal, a closed circuit is formed between the second end of the second switch tube and the third end of the first switch tube; or
when the first end of the second switch tube does not receive the overcurrent signal, an open circuit is formed between the second end of the second switch tube and the third end of the first switch tube.

6. The overcurrent protective circuit of claim 5, wherein

a third resistor is connected in series between the second end of the second switch tube and the charging power supply,
a second capacitor is set between a second preset point and an earthing point,
the second preset point is between the second end of the second switch tube and the charging power supply, and
the control module collects a voltage value corresponding to the second capacitor through the second preset point.

7. The overcurrent protective circuit of claim 6, wherein the charging and discharging module further includes a fourth resistor, and two ends of the fourth resistor are connected with the second preset point and the first end of the first switch tube, respectively.

8. The overcurrent protective circuit of claim 1, wherein the control module includes a comparator module, a power switch module, and a power switch control module, wherein

the comparator module is configured to compare the voltage of the first capacitor with the first voltage and the second voltage;
the power switch control module is connected with the comparator module, and configured to send a turn-on signal or a turn-off signal according to a comparison result of the comparator module; and
the power switch module is connected with the power switch control module, and configured to control turn-on and turn-off of the circuit to be protected according to the turn-on signal or the turn-off signal of the power switch control module.

9. The overcurrent protective circuit of claim 8, wherein the comparator module includes a hysteresis comparator, and the hysteresis comparator is configured to compare the voltage of the first capacitor with the first voltage and the second voltage.

10. The overcurrent protective circuit of claim 8, wherein the comparator module includes two or more comparators, one of the two or more comparators is configured to compare the voltage of the first capacitor with the first voltage, and another of the two or more comparators is configured to compare the voltage of the first capacitor with the second voltage.

11. The overcurrent protective circuit of claim 6 or claim 8, wherein

a first end of the comparator module is connected with the first preset point;
a second end of the comparator module is connected with the second preset point through a fifth resistor, and is grounded through a sixth resistor;
a third end of the comparator module is connected with the second preset point;
a fourth end of the comparator module is grounded; and
a fifth end of the comparator module is connected with the second end of the comparator module through a seventh resistor, and the fifth end of the comparator module is connected with the power switch control module.

12. The overcurrent protective circuit of claim 11, wherein

the power switch control module includes a first triode, and a first end of the first triode is connected with the fifth end of the comparator module through an eighth resistor;
a third preset point between the eighth resistor and the first end of the first triode is connected with the second preset point through a ninth resistor; and
a second end of the first triode is connected with the power switch module through a tenth resistor, and a third end of the first triode is grounded.

13. The overcurrent protective circuit of claim 6, wherein

the power switch module includes a third switch tube and an eleventh resistor, a first end of the third switch tube is connected with a first end of a power supply of the circuit to be protected through the eleventh resistor, a second end of the third switch tube is connected with a second end of the power supply of the circuit to be protected, and a third end of the third switch tube is connected with an external load; and
the charging and discharging module is not capable of obtaining the overcurrent signal when an open circuit is formed between the second end of the third switch tube and the third end of the third switch tube.

14. The overcurrent protective circuit of claim 1, wherein
a first end of the current sampling module is connected with a second end of a power supply of the circuit to be protected, a second end of the current sampling module is connected with a first end of the power supply of the circuit to be protected, and a third end of the current sampling module is connected with the charging and discharging module.

15. The overcurrent protective circuit of claim 14, wherein

the current sampling module includes a third triode, and a first end of the third triode is connected with the charging and discharging module;
a second end of the third triode is connected with the second end of the power supply of the circuit to be protected;
a third end of the third triode is connected with a first end of a thirteenth resistor through a twelfth resistor;
the first end of the thirteenth resistor is also connected with the control module; and
a second end of the thirteenth resistor is connected with the second end of the power supply of the circuit to be protected.

100

Current Sampling
Module
110

Overcurrent signal

Charging And
Discharging Module
120

Voltage signal

Control Module
130

**FIG. 1**

**200**

Power supply of a circuit to be protected — 13

Overcurrent signal

Charging power supply

112

11

11d

12

Control module

11c

11a

**FIG. 2**

**300**

13 — | Power supply of a circuit to be protected |

Overcurrent signal

11b

11

11d

11c

12

| Control module |

11a

**FIG. 3**

**400**

FIG. 4

**FIG. 5**

**FIG. 6**

**700**

Power supply of
a circuit to be
protected — 13

Overcurrent
signal

FIG. 7

**800**

Power supply of a
circuit to be
protected

13a    13    13b

11

22

23

Overcurrent
signal

31

21b

24

24a

24b

21a    21c

21

11b

62

11d

61a

11c    11a

61

61b

External
load

61c

12

54

53

52

41

41c

44

51b

41e    41b

51c

51a    45

51    41a

51d    41d

**FIG. 8**

**900**

**FIG. 9**

**1000**

**FIG. 10**

FIG. 11

**FIG. 12**

**FIG. 13**

**FIG. 14**

**FIG. 15**

411a

411b

411c

411

412a

412c

412b

412

**FIG. 16**

Europäisches
Patentamt

European
Patent Office

Office européen
des brevets

## EUROPEAN SEARCH REPORT

Application Number

EP 23 15 6582

## DOCUMENTS CONSIDERED TO BE RELEVANT

| Category | Citation of document with indication, where appropriate, of relevant passages | Relevant to claim | CLASSIFICATION OF THE APPLICATION  (IPC) |
|---|---|---|---|
| X | CN 106 532 629 A (UNIV ELECTRONIC SCIENCE & TECH CHINA) 22 March 2017 (2017-03-22) * paragraphs [0019] - [0020]; figure 1 * | 1,8-13 | INV. H02H3/093 H02H3/00 |
| X | CN 112 993 933 A (YIBIN TINGDIAN TECH CO LTD) 18 June 2021 (2021-06-18) * paragraphs [0034] - [0050]; figure 3 * | 1,14,15 | |
| X | US 5 086 366 A (ISHII KAZUHIRO [JP] ET AL) 4 February 1992 (1992-02-04) * column 4, line 40 - column 6, line 14; figure 4 * | 1-7 | |
| X | US 5 825 602 A (TOSAKA HIROAKI [JP] ET AL) 20 October 1998 (1998-10-20) * columns 3,4; figures 1,2 * | 1 | |

TECHNICAL FIELDS
SEARCHED       (IPC)

H02H

The present search report has been drawn up for all claims

| Place of search | Date of completion of the search | Examiner |
|---|---|---|
| Munich | 31 January 2024 | Colombo, Alessandro |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
............................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

**EP 23 15 6582**

This annex lists the patent family members relating to the patent documents cited in the above-mentioned European search report.
The members are as contained in the European Patent Office EDP file on
The European Patent Office is in no way liable for these particulars which are merely given for the purpose of information.

**31-01-2024**

| Patent document cited in search report | | Publication date | Patent family member(s) | | Publication date |
|---|---|---|---|---|---|
| CN 106532629 | A | 22-03-2017 | NONE | | |
| CN 112993933 | A | 18-06-2021 | NONE | | |
| US 5086366 | A | 04-02-1992 | DE | 69114033 T2 | 30-05-1996 |
| | | | EP | 0446950 A2 | 18-09-1991 |
| | | | JP | H03270632 A | 02-12-1991 |
| | | | KR | 910017750 A | 05-11-1991 |
| | | | US | 5086366 A | 04-02-1992 |
| | | | ZA | 911873 B | 29-01-1992 |
| US 5825602 | A | 20-10-1998 | CN | 1166709 A | 03-12-1997 |
| | | | DE | 19712548 A1 | 30-10-1997 |
| | | | JP | 3250648 B2 | 28-01-2002 |
| | | | JP | H09259733 A | 03-10-1997 |
| | | | KR | 19990008485 A | 05-02-1999 |
| | | | TW | 442811 B | 23-06-2001 |
| | | | US | 5825602 A | 20-10-1998 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202210920278